# FASCICULE DE BREVET EUROPEEN

(11) **EP 1 137 559 B1**
(45) Date de publication et mention de la délivrance du brevet: **14.09.2005**
(21) Numéro de dépôt: 99957375.1
(22) Date de dépôt: 09.12.1999
(51) Int. Cl.: B60T 7/06

(54) **DISPOSITIF DE LIAISON MECANIQUE DEVERROUILLABLE PYROTECHNIQUEMENT ET METTANT EN OEUVRE UN PISTON**
MIT HILFE EINES KOLBENS PYROTECHNISCH ENTRIEGELBARE MECHANISCHE VERBINDUNGSVORRICHTUNG
MECHANICAL LINKAGE DEVICE CAPABLE OF BEING PYROTECHNICALLY RELEASED USING A PISTON

(30) Priorité: 09.12.1998 FR 9815637
(43) Date de publication de la demande: 04.10.2001
(73) Titulaire: GIAT Industries, 78000 Versailles (FR)
(72) Inventeur: VIDOT, Jean-Paul, F-65320 Bordères sur l'Echez (FR); CHEMIERE, Patrice, F-65350 Laslades (FR)
(74) Mandataire: Célanie, Christian
(86) Numéro de dépôt international: PCT/FR1999/003066
(87) Numéro de publication internationale: WO 2000/034093

(56) Documents cités:
- DE-A- 4 305 049
- DE-A- 19 634 257
- DE-C- 19 617 372
- GB-A- 2 322 836

## Description

Le domaine technique de l'invention est celui des dispositifs de liaison mécanique entre un premier élément mécanique et un deuxième élément mécanique, dispositifs déverrouillables pyrotechniquement.

De tels dispositifs sont connus notamment dans le domaine des sécurités automobiles.

On connaît par exemple par le brevet DE19515852 un dispositif permettant de désolidariser pyrotechniquement deux extrémités d'une tige de commande d'un maître cylindre de frein automobile. Une telle désolidarisation intervient en cas d'accident pour éviter un choc de la pédale de frein sur les chevilles du conducteur.

Le dispositif de liaison mécanique déverrouillable décrit par ce document met en oeuvre une charge pyrotechnique disposée dans un logement aménagé sur la tige ou bien dans un manchon de raccordement entre deux éléments de la tige.

On connaît également des dispositifs de désolidarisation qui mettent en oeuvre ce que l'on appelle communément des boulons explosifs. Le brevet DE19515852 décrit également cette solution qui est employée d'une façon classique dans les dispositifs de désolidarisation utilisés sur les engins balistiques ou en aéronautique.

L'inconvénient de ces solutions est qu'elles s'appuient sur les effets brisants d'une charge pyrotechnique. On utilise en effet un ou plusieurs explosifs primaires, éventuellement associés à un ou plusieurs explosifs secondaires ou à des substances énergétiques mais fortement confinées.

Or les explosifs primaires sont des matériaux sensibles qui sont donc de mise en oeuvre délicate ou dangereuse.

Afin d'assurer la rupture de pièces mécaniques de maintien, les quantités de charges pyrotechniques nécessaires sont également importantes (>100 mg), ce qui accroît encore les risques et les coûts.

Les boulons explosifs connus ou les autres systèmes brisants sont donc mal adaptés aux applications civiles notamment dans le domaine de l'automobile.

De plus les boulons connus constituent un moyen de liaison qui est inséré transversalement par rapport aux éléments à solidariser. Lors de l'initiation du boulon, des morceaux de celui ci risquent de rester engagés dans les différents éléments et ils peuvent ainsi perturber l'écartement ou la désolidarisation de ces derniers. L'effort de séparation des deux éléments est donc non reproductible et le dispositif n'est pas suffisamment fiable, sauf à utiliser une quantité d'explosif trop importante.

On connaît également par le brevet DE19617372 un autre dispositif permettant de désolidariser pyrotechniquement deux extrémités d'une tige de commande d'un maître cylindre de frein automobile.

Dans ce dispositif la tige de maître cylindre est rendue solidaire en translation de la pédale de commande au moyen d'un anneau disposé dans une gorge. Cet anneau est chassé par les efforts de traction ou de compression exercés sur la tige et il est maintenu dans sa position de verrouillage par un moyen de maintien qui est constitué par un piston poussé par un ressort.

Afin d'assurer la désolidarisation, on initie une charge pyrotechnique qui génère des gaz agissant sur le piston contre l'action du ressort.

Les gaz sont également dirigés dans une chambre où ils exercent un effort tendant à séparer les éléments à désolidariser.

Un tel dispositif présente pour premier inconvénient d'avoir une structure complexe comprenant de nombreuses pièces mobiles et notamment des ressorts dont les caractéristiques mécaniques sont susceptibles de se dégrader au cours du temps.

Cette structure est donc susceptible de se coincer, aussi elle met en oeuvre une quantité de composition pyrotechnique importante permettant notamment d'agir directement sur les éléments mécaniques à désolidariser de façon à libérer l'anneau de verrouillage.

Le générateur de gaz est de forme annulaire, il est donc compliqué à fabriquer et à intégrer.

De plus les gaz ayant pour effet d'agir directement sur les moyens de verrouillage, il en résulte une perte totale de la possibilité d'agir sur la tige de maître cylindre en cas de déclenchement inopiné du composant pyrotechnique.

En l'absence d'un contexte d'accident, le déclenchement de ce dispositif entraîne donc une perte totale de la capacité de freinage.

C'est le but de l'invention que de proposer un dispositif de liaison mécanique de deux éléments mécaniques qui est déverrouillable pyrotechniquement et qui ne présente pas de tels inconvénients.

Le dispositif de liaison mécanique déverrouillable pyrotechniquement selon l'invention est de structure simple, compacte et peu coûteuse. Il est de mise en oeuvre simple et permet de n'utiliser qu'une quantité réduite de composition pyrotechnique, composition qui pourra éventuellement être dépourvue d'explosif primaire. Pratiquement on pourra utiliser uniquement la masse de composition contenue dans un initiateur pyrotechnique pour systèmes de sécurités automobiles.

Un initiateur pyrotechnique standard peut par ailleurs être facilement intégré à l'intérieur du dispositif selon l'invention et cela sans modifications de sa structure.

De plus le dispositif selon l'invention est fiable et il assure une bonne reproductibilité des efforts de séparation entre les éléments mécaniques.

Ainsi l'invention a pour objet un dispositif de liaison mécanique déverrouillable pyrotechniquement entre deux éléments mécaniques susceptibles d'être soumis à des efforts de traction et/ou de compression suivant un axe, dispositif comprenant au moins un composant pyrotechnique et au moins un moyen de verrouillage assurant la liaison entre les deux éléments mécaniques suivant au moins un axe, moyen de verrouillage susceptible d'être libéré lorsque les éléments mécaniques sont soumis aux efforts de traction et/ou de compression suivant ledit axe et qui est maintenu dans sa position de verrouillage par des moyens de maintien qui sont libérés par la pression des gaz engendrés par l'initiation du composant pyrotechnique, dispositif *caractérisé en ce que* les moyens de maintien comprennent un piston pouvant coulisser dans un alésage cylindrique axial interne sous l'effet de la pression des gaz engendrés par l'initiation du composant pyrotechnique, le moyen de verrouillage étant en contact avec le piston au niveau d'une surface cylindrique externe ou première portée de celui-ci qui assure leur maintien en position de verrouillage, le moyen de verrouillage est lié en translation avec un premier des éléments mécaniques et comprend au moins un profil coopérant avec un profil complémentaire solidaire d'un deuxième des éléments mécaniques, le moyen de verrouillage délimitant également au moins partiellement l'alésage axial dans lequel peut coulisser le piston, le moyen de verrouillage comprend au moins deux becs déformables solidaires du premier des éléments et comprenant chacun au moins un profil externe coopérant avec un profil complémentaire solidaire du deuxième des éléments mécaniques, becs délimitant l'alésage cylindrique interne recevant le piston.

Les becs auront avantageusement un profil externe conique.

Le composant pyrotechnique pourra être solidaire du piston.

L'alésage cylindrique axial interne délimité par les becs pourra être prolongé par une chambre destinée à recevoir la pression des gaz engendrés par l'initiation du composant pyrotechnique.

Le piston pourra également comporter une deuxième portée cylindrique de diamètre inférieur à celui de la surface cylindrique ou première portée maintenant les becs, deuxième portée qui viendra se positionner en regard de l'alésage cylindrique axial interne délimité par les becs lorsque le piston se translatera par l'action de la pression des gaz, autorisant ainsi une flexion des becs en direction du piston, flexion qui permettra le dégagement du profil externe des becs d'avec son profil complémentaire.

La deuxième portée cylindrique pourra être délimitée d'un côté par une collerette assurant un guidage du piston par rapport à une surface cylindrique interne de la chambre.

Après translation du piston, la collerette pourra venir se loger dans une gorge aménagée à une extrémité de la chambre.

La surface cylindrique externe ou première portée du piston maintenant les becs pourra comporter un bourrelet coopérant avec une rainure circulaire aménagée sur la surface cylindrique de l'alésage axial interne de façon à assurer un positionnement axial du piston dans sa position de maintien.

Le dispositif comportera avantageusement au moins trois becs déformables régulièrement répartis angulairement.

Selon un autre mode de réalisation de l'invention le premier des éléments mécaniques qui porte les becs déformables pourra comprendre une partie filetée constituant une tige de vis, le deuxième des éléments mécaniques constituera alors une tête pour ladite vis.

Le composant pyrotechnique sera alors avantageusement solidaire de la tête de la vis et l'alésage cylindrique axial interne recevant le piston pourra être aménagé dans la tige de la vis.

L'alésage cylindrique axial interne pourra présenter un lamage interne constituant une butée axiale pour le piston lorsqu'il occupe sa position de déverrouillage.

Le piston pourra comporter un joint d'étanchéité annulaire coopérant avec une surface cylindrique interne de l'alésage.

Plus précisément, la tête de la vis pourra comprendre un corps délimitant une chambre interne qui sera obturée d'un côté par la tige de la vis et de l'autre par un bouchon qui viendra en appui sur un renflement périphérique du composant pyrotechnique, une bague entretoise entourant une extrémité du composant pyrotechnique et comportant une première surface de butée coopérant avec le renflement du composant et une deuxième surface de butée pour une extrémité de la tige de la vis de façon à éviter tout contact de cette dernière avec le composant pyrotechnique lors du montage du bouchon.

Suivant une application particulière de l'invention, le premier élément mécanique pourra être solidaire d'une extrémité d'une tige d'un maître cylindre de frein de véhicule et le deuxième élément mécanique sera solidaire d'une pédale de freinage.

L'invention sera mieux comprise à la lecture de la description qui va suivre de modes particuliers de réalisation, description faite en référence aux dessins annexés et dans lesquels :
- la figure 1 représente schématiquement l'intégration d'un dispositif de liaison déverrouillable selon un mode de réalisation de l'invention pour réaliser la liaison d'une pédale de frein de véhicule automobile et d'une tige de maître cylindre,
- la figure 2 représente en coupe longitudinale un premier mode de réalisation d'un dispositif de liaison selon l'invention, coupe réalisée suivant le plan dont la trace BB est repérée à la figure 3,
- la figure 3 est une coupe transversale de ce dispositif, coupe réalisée suivant le plan dont la trace AA est repérée sur la figure 2,
- la figure 4 représente en coupe longitudinale un deuxième mode de réalisation d'un dispositif de liaison déverrouillable, coupe réalisée suivant le plan dont la trace EE est repérée à la figure 5, et
- la figure 5 est une vue de la précédente en coupe transversale suivant le plan dont la trace CC est représentée sur la figure 4.

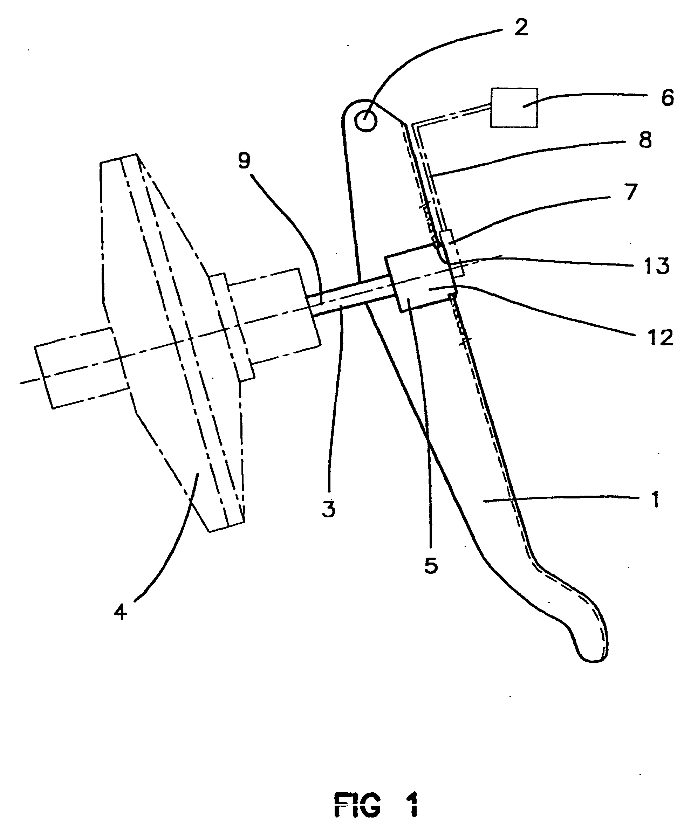

La figure 1 montre une pédale de frein 1 d'un véhicule automobile. Cette pédale est articulée par rapport au plancher du véhicule au niveau d'un axe 2. Elle agit sur une tige 3 d'un maître cylindre 4 de frein par l'intermédiaire d'un dispositif de liaison mécanique déverrouillable 5.

Une articulation (non représentée telle une chape) est prévue entre le dispositif 5 et la tige 3 afin d'autoriser le débattement angulaire de la pédale 1.

Le dispositif de liaison mécanique déverrouillable 5 est actionné par une électronique de commande 6 du véhicule à laquelle il est relié par un connecteur standard automobile 7 et une liaison filaire 8.

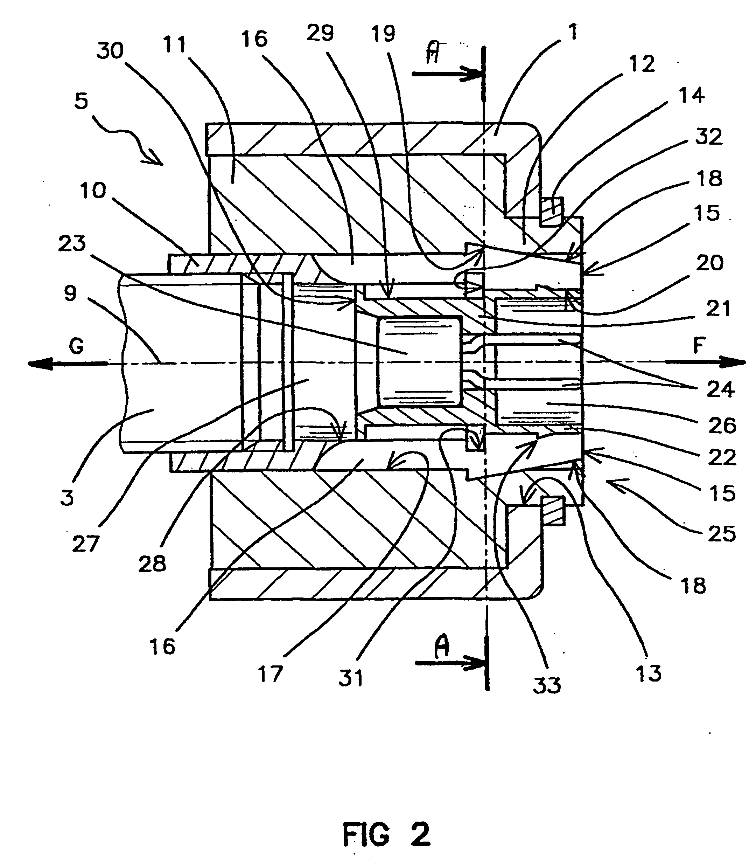

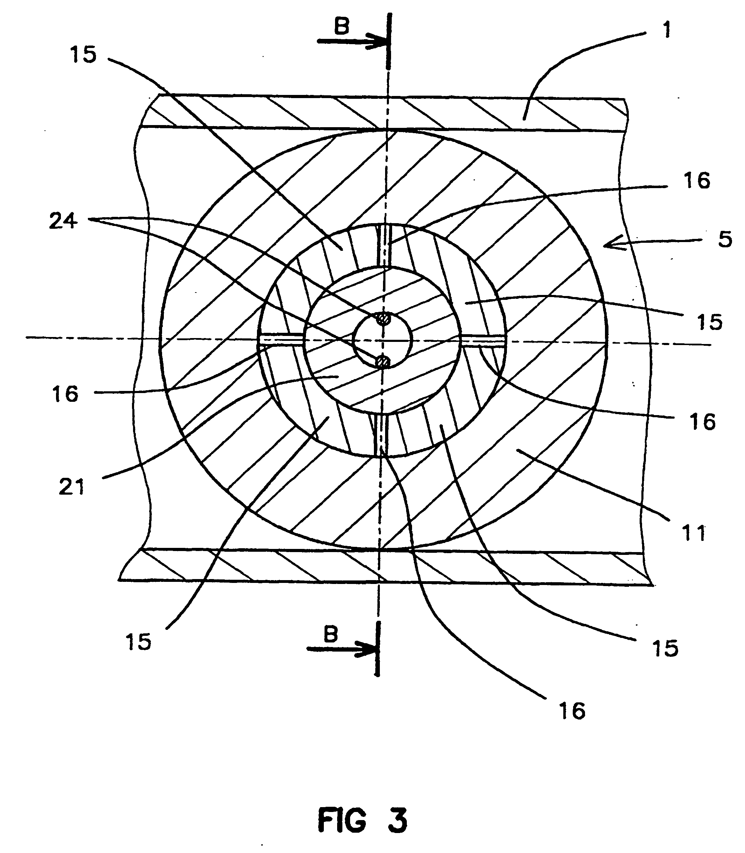

Le dispositif de déverrouillage 5 suivant un premier mode de réalisation est visible en détails aux figures 2 et 3.

Il comprend un premier élément mécanique qui est un tube 10 rendu solidaire par vissage de l'extrémité de la tige 3 du maître cylindre.

Ce tube se loge dans un alésage 17 d'un deuxième élément mécanique qui est un moyeu cylindrique 11 comportant une portée 12 de diamètre réduit. Cette portée 12 se loge dans un trou complémentaire 13 aménagé sur la pédale de frein 1. Le moyeu 11 est rendu solidaire de la pédale 1 à l'aide d'un anneau élastique 14 qui est positionné dans une gorge circulaire de la portée 12.

La pédale de frein 1 a une forme générale en U et elle est réalisée en tôle pliée.

Les deux éléments mécaniques 10 et 11 sont soumis à des efforts de traction et/ou de compression suivant un axe 9.

L'extrémité du tube 10 qui se trouve au voisinage de la portée 12 comporte quatre becs 15 séparés par des fentes 16. Les fentes 16 ont une longueur choisie de façon à donner aux becs 15 une certaine souplesse en flexion.

Chaque bec 15 comporte un profil externe conique 18 qui coopère avec une gorge ayant un profil complémentaire 19 et aménagée dans l'alésage 17 du moyeu 11.

Les quatre becs 15 se logent tous dans la même gorge conique 19.

Les becs 15 délimitent sur le tube 10 un alésage cylindrique interne 20 dans lequel vient se positionner une première portée cylindrique 22 d'un piston 21.

Le piston 21 porte un composant pyrotechnique 23 qui se loge dans une cavité aux dimensions appropriées. Les broches 24 du composant sont orientées parallèlement à l'axe 9 du dispositif et dirigées vers une face avant 25 du dispositif.

Un logement 26 est aménagé dans le piston 21 et permet de recevoir le connecteur 7 (voir figure 1) qui se raccorde aux broches 24.

Le composant pyrotechnique 23 est destiné à engendrer des gaz qui rempliront une chambre 27 qui prolonge l'alésage cylindrique 20. Cette chambre est délimitée par une surface cylindrique interne 28 du tube 10 et elle est fermée d'un côté par le piston 21 et de l'autre par une extrémité de la tige 3.

Le piston 21 comporte une deuxième portée cylindrique 29 de diamètre inférieur à celui de la première portée 22.

Cette deuxième portée 29 est délimitée d'un côté par une collerette 30 assurant un guidage du piston 21 par rapport à la surface cylindrique interne 28 de la chambre 27.

Le diamètre de la chambre 27 est supérieur à celui de l'alésage cylindrique 20 délimité par les becs déformables.

Il en résulte une surface de butée 32 sur laquelle la collerette 30 sera arrêtée lors de la translation du piston 21.

La deuxième portée 29 est destinée à venir se positionner en regard de l'alésage 20 délimité par les becs 15 lorsque le piston 21 se translate par l'action de la pression des gaz et vient en butée contre la surface 32. Elle a donc une longueur supérieure ou égale à celle des becs 15.

Une gorge circulaire 31 est réalisée entre la surface cylindrique 28 de la chambre 27 et l'alésage cylindrique 20 délimité par les becs.

Cette gorge a un diamètre choisi de façon à empêcher toute interférence des becs 15 avec la collerette 30 lors de leur flexion.

Enfin, la première portée cylindrique 22 du piston 21 comporte un bourrelet 33 coopérant avec une rainure circulaire complémentaire aménagée sur la surface cylindrique de l'alésage interne 20 de façon à assurer un positionnement axial du piston 21 dans sa position de maintien.

Le fonctionnement de ce dispositif est le suivant.

Dans la position verrouillée qui est représentée aux figures 2 et 3, le tube 10 et le moyeu 11 sont solidaires en translation l'un de l'autre grâce au moyen de verrouillage qui est constitué par les becs 15 solidaires du tube 10 et coopérant avec le profil conique complémentaire 19 aménagé sur le moyeu 11.

Ce moyen de verrouillage est maintenu en position de verrouillage grâce au moyen de maintien constitué par le piston 21 dont la première portée cylindrique 22 empêche toute flexion des becs 15.

La coopération du bourrelet 33 dans sa rainure circulaire assure le positionnement du piston 21 dans sa position de maintien et évite tout déplacement accidentel.

Lorsque le composant pyrotechnique 23 est initié, la pression des gaz qui se développe dans la chambre 27 pousse le piston 21 vers la face avant 25 du dispositif (dans la direction repérée par la flèche F sur la figure 2).

Concrètement l'impulsion reçue par le piston lors de l'initiation du composant suffit à pousser le piston.

Il n'est donc pas nécessaire de prévoir une étanchéité aux gaz au niveau des fentes 16. En fonction des caractéristiques du composant pyrotechnique on pourra néanmoins disposer dans les fentes une matière plastique souple ou encore de la graisse afin d'améliorer l'étanchéité aux gaz et de permettre un accroissement de la pression dans la chambre 27.

Le piston 21 se déplace jusqu'à mise en butée de la collerette 30 sur la surface de butée 32. A ce moment la deuxième portée cylindrique 29 du piston 21 se trouve positionnée en regard de l'alésage 20 délimité par les becs 15.

Le diamètre de cette deuxième portée est inférieur à celui de la première portée 22 et il est choisi suffisamment réduit pour que la déformation par flexion radiale des becs 15 soit possible jusqu'à dégagement de leur profil conique externe 18 hors du logement complémentaire 19.

Le tube 10 peut alors se translater par rapport au moyeu 11 suivant la direction F, ce qui interviendra lorsqu'un effort d'une certaine intensité sera appliqué sur la pédale 1 suivant la direction G (effort de compression).

On notera qu'il est possible de dimensionner les becs 15 de telle sorte que l'effort entraînant la désolidarisation soit d'une intensité donnée (de l'ordre de 150 daN). On autorisera alors une manoeuvre du frein en cas d'initiation intempestive du composant pyrotechnique.

Lorsque l'effort exercé dépassera le niveau prédéfini, le dégagement des becs hors de leur logement se produira, entraînant la désolidarisation de la pédale et de la tige de maître cylindre et protégeant le conducteur des blessures pouvant être provoquées par les pédales.

Il est aisé pour l'Homme du Métier de dimensionner les becs 15 en fonction de l'effort souhaité pour entraîner la désolidarisation. On pourra jouer sur :
- la profondeur des rainures 16, des rainures profondes donnant une souplesse supérieure,
- l'angle des profils coniques 18 et 19, un accroissement de l'angle du cône augmentant l'effort de dégagement,
- la largeur de la gorge conique 19, une gorge large imposera pour obtenir le dégagement des becs une flexion supérieure donc un effort également supérieur,
- la largeur de chaque bec et le nombre de becs, des becs étroits pouvant fléchir avec un effort moindre .

La surface de butée 32 interdit l'éjection du piston 21 hors du dispositif évitant ainsi de provoquer des blessures.

Différentes variantes sont possibles sans sortir du cadre de l'invention.

Il est ainsi possible de varier le nombre de becs 15.

Il est possible également de remplacer les profils externes coniques par des profils différents par exemple des profils sphériques.

Il est possible également de remplacer le profil à un seul cône 18 par un profil formé de deux cônes consécutifs et ayant leur grande base commune. Une telle disposition (tout comme celle mettant en oeuvre des profils sphériques) permettra de réaliser un dispositif pouvant se désolidariser avec indifféremment un effort de traction ou de compression.

On pourra donner alors à chaque cône un angle différent et/ou une longueur de profil complémentaire sur le moyeu différente, ce qui permettra d'assurer un effort de désolidarisation ayant une intensité différente dans le sens de la traction et dans le sens de la compression.

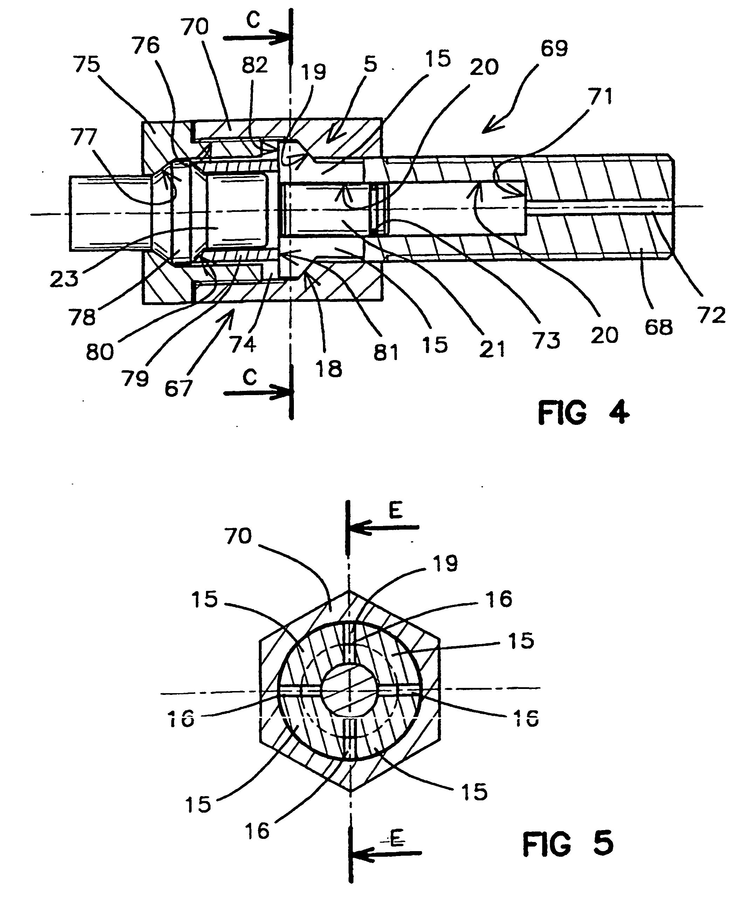

La figure 4 montre un deuxième mode de réalisation d'un dispositif de liaison selon l'invention.

Ce dispositif de liaison déverrouillable 5 permet de former une vis pyrotechnique 69 qui permettra d'assurer une liaison mécanique entre deux éléments mécaniques non représentés. La vis 69 comprend une tête 67 et une partie filetée 68 ou tige de vis.

D'une façon classique la partie filetée 68 sera rendue solidaire d'un élément mécanique (non représenté) tandis que la tête 67 prendra appui sur un autre élément mécanique (non représenté).

Suivant ce mode particulier de réalisation, le dispositif de liaison déverrouillable 5 permettra donc de séparer un premier élément mécanique qui comprendra la tige filetée 68 et un deuxième élément mécanique constitué par la tête 67.

D'une façon analogue au mode de réalisation précédent décrit en référence aux figures 2 et 3, le premier élément mécanique 68 porte quatre becs déformables 15 régulièrement répartis angulairement et séparés par des fentes 16 qui pourront éventuellement être remplies de graisse pour améliorer l'étanchéité aux gaz.

Chaque bec 15 comporte un profil conique externe 18 qui coopère avec un profil complémentaire 19 aménagé dans un corps 70 de la tête 67.

Les quatre becs délimitent un alésage cylindrique interne 20 qui reçoit un piston 21.

L'alésage axial 20 se prolonge à l'intérieur de la tige 68 de la vis et il présente un lamage interne 71 constituant une butée axiale pour le piston 21 lorsque ce dernier s'est translaté pour venir occuper sa position de déverrouillage.

Un canal axial 72 prolonge l'alésage 20 et permet, lors du déplacement du piston 21, d'évacuer l'air se trouvant dans l'alésage 20. Le piston 21 comporte un joint d'étanchéité annulaire 73 disposé dans un gorge et coopérant avec une surface cylindrique interne de l'alésage 20. Ce joint est destiné à assurer une étanchéité vis à vis des gaz engendrés par le composant pyrotechnique 23.

Le composant pyrotechnique 23 est disposé dans une chambre interne 74 qui est délimitée par le corps 70 de la tête 67 de la vis.

Il est maintenu par un bouchon 75 qui se visse dans un taraudage 76 du corps 70 et qui prend appui par un lamage 77 sur un renflement périphérique 78 du composant pyrotechnique 23.

Une bague entretoise 79 entoure une extrémité du composant pyrotechnique 23 et comporte une première surface de butée 80 coopérant avec le renflement 78 du composant pyrotechnique 23 et une deuxième surface de butée 81 sur laquelle vient en appui une extrémité 82 de la tige 68 de la vis.

Ainsi, lors du montage de la vis, le vissage du bouchon 75 sur le corps 70 entraîne l'immobilisation- axiale du composant pyrotechnique 23 qui se trouve pincé entre le bouchon 75 et la bague entretoise 79. Une telle disposition permet également d'éviter tout contact entre l'extrémité 82 de la tige 68 de la vis et le composant pyrotechnique 23. On évite ainsi la détérioration du composant lors du montage de la vis.

Le vissage du bouchon 75 permet également d'exercer, par l'intermédiaire de la bague 79, une pré contrainte sur les becs déformables 15 qui se trouvent appliqués sur le profil conique 19.

Le profil externe du corps 70 de la tête est ici un profil hexagonal mais tout autre profil permettant le serrage à l'aide d'un outil serait envisageable (carré, cylindrique avec encoches pour un clé de serrage...).

Le montage de cette vis pyrotechnique se réalise de la façon suivante:

Le piston est tout d'abord positionné dans l'alésage 20 de la tige 68 de vis et dans sa position de verrouillage des becs 15.

La tige 68 de la vis est alors introduite dans le corps 70 de la tête. Le diamètre du trou traversant la tête 70 est bien entendu supérieur à celui de la tige 68 de la vis. Les becs 15 se trouvent donc en butée contre le profil interne conique 19 du corps 70 de la tête.

On visse enfin sur le corps 70 le bouchon 75 portant le composant pyrotechnique 23 et la bague entretoise 79.

On visse ce bouchon (qui sera doté de moyens permettant d'engager un outil par exemples de plats ou d'encoches) jusqu'à mise en butée de la bague 79 contre l'extrémité 82 de la tige 68 de la vis. Une précontrainte est donnée lors de ce serrage afin d'appliquer fermement les becs 15 contre le profil conique 19 ce qui favorisera leur déformation lors du déverrouillage du dispositif.

Le fonctionnement de ce dispositif est le suivant.

Lorsque le composant pyrotechnique 23 est initié, les gaz engendrés poussent le piston 21 vers le fond de l'alésage 20 jusqu'en butée contre le lamage 71.

La profondeur de l'alésage 20 est suffisante pour que, dans cette position déverrouillée, le piston 21 ne se trouve plus en regard des becs déformables 15.

Les efforts axiaux tendant à écarter la tige 68 et la tête 67, c'est à dire les efforts habituels dus au serrage d'une vis, auront alors pour effet de provoquer la déformation des becs 15 qui seront repoussés par le profil conique 19.

La tige 68 de la vis se sépare alors de la tête 67 de la vis. La séparation est facilitée par la précontrainte initiale donnée par le serrage du bouchon 75 lors du montage du dispositif.

Il est bien entendu possible avec un tel mode de réalisation de faire varier le nombre de becs 15.

Un tel dispositif de liaison déverrouillable peut être utilisé dans toutes les applications aussi simplement qu'une vis normale. Il assure une désolidarisation comme suite à un effort de traction exercé entre la tige et la tête de la vis. On pourra par exemple utiliser une telle vis ou un tel dispositif pour assurer la liaison d'une charge aérolarguable à un aéronef.

## Revendications

1. Dispositif (5) de liaison mécanique déverrouillable pyrotechniquement entre deux éléments mécaniques susceptibles d'être soumis à des efforts de traction et/ou de compression suivant un axe, dispositif comprenant au moins un composant pyrotechnique (23) et au moins un moyen de verrouillage (15), assurant la liaison entre les deux éléments mécaniques suivant au moins un axe, moyen de verrouillage susceptible d'être libéré lorsque les éléments mécaniques sont soumis aux efforts de traction et/ou de compression suivant ledit axe et qui est maintenu dans sa position de verrouillage par des moyens de maintien (21) qui sont libérés par la pression des gaz engendrés par l'initiation du composant pyrotechnique (23), dispositif ***caractérisé en ce que*** les moyens de maintien comprennent un piston (21) pouvant coulisser dans un alésage cylindrique axial interne (20) sous l'effet de la pression des gaz engendrés par l'initiation du composant pyrotechnique (23), le moyen de verrouillage (15) étant en contact avec le piston (21) au niveau d'une surface cylindrique externe (22) ou première portée de celui-ci qui assure leur maintien en position de verrouillage, le moyen de verrouillage (15) est lié en translation avec un premier (10, 68) des éléments mécaniques et comprend au moins un profil (18) coopérant avec un profil complémentaire (19) solidaire d'un deuxième (11, 67) des éléments mécaniques, le moyen de verrouillage (15) délimitant également au moins partiellement l'alésage cylindrique axial interne (20) dans lequel peut coulisser le piston (21), le moyen de verrouillage comprend au moins deux,becs déformables (15) solidaires du premier (10, 68) des éléments mécaniques et comprenant chacun au moins un profil externe (18) coopérant avec un profil complémentaire (19) solidaire du deuxième (11, 67) des éléments mécaniques, becs délimitant l'alésage cylindrique axial interne recevant le piston (21).

2. Dispositif de liaison mécanique déverrouillable selon la revendication 1, **caractérisé en ce que** les becs (15) ont un profil externe (18) conique.

3. Dispositif de liaison mécanique déverrouillable selon la revendication 1 ou 2, **caractérisé en ce que** le composant pyrotechnique (23) est solidaire du piston (21).

4. Dispositif de liaison mécanique déverrouillable selon la revendication 3, **caractérisé en ce que** l'alésage cylindrique axial interne (20) délimité par les becs (15) est prolongé par une chambre (27) destinée à recevoir la pression des gaz engendrés par l'initiation du composant pyrotechnique (23).

5. Dispositif de liaison mécanique déverrouillable selon la revendication 4, **caractérisé en ce que** le piston (21) comporte une deuxième portée cylindrique (29) de diamètre inférieur à celui de la surface cylindrique externe (22) ou première portée maintenant les becs, deuxième portée qui vient se positionner en regard de l'alésage cylindrique axial interne (20) délimité par les becs (15) lorsque le piston (21) se translate par l'action de la pression des gaz, autorisant ainsi une flexion des becs (15) en direction du piston (21), flexion qui permet le dégagement du profil externe (18) des becs (15) d'avec son profil complémentaire (19).

6. Dispositif de liaison mécanique déverrouillable selon la revendication 5, **caractérisé en ce que** la deuxième portée cylindrique (29) est délimitée d'un côté par une collerette (30) assurant un guidage du piston (21) par rapport à une surface cylindrique interne (28) de la chambre (27).

7. Dispositif de liaison mécanique déverrouillable selon la revendication 6, **caractérisé en ce que**, après translation du piston (21), la collerette (30) vient se loger dans une gorge (31) aménagée à une extrémité de la chambre (27).

8. Dispositif de liaison mécanique déverrouillable selon l'une quelconque des revendications 1 à 7, **caractérisé en ce que** la surface cylindrique externe (22) ou première portée du piston maintenant les becs comporte un bourrelet (33) coopérant avec une rainure circulaire aménagée sur la surface cylindrique de l'alésage axial interne (20) de façon à assurer un positionnement axial du piston (21) dans sa position de maintien.

9. Dispositif de liaison mécanique déverrouillable selon l'une quelconque des revendications 1 à 8, **caractérisé en ce qu'**il comporte au moins trois becs (15) déformables régulièrement répartis angulairement.

10. Dispositif de liaison mécanique déverrouillable selon la revendication 1 ou 2, **caractérisé en ce que** le premier des éléments mécaniques portant les becs déformables (15) comprend une partie filetée (68) constituant une tige de vis, le deuxième des éléments mécaniques constituant une tête (67) pour ladite vis.

11. Dispositif de liaison mécanique déverrouillable selon la revendication 10, **caractérisé en ce que** le composant pyrotechnique (23) est solidaire de la tête (67) de la vis.

12. Dispositif de liaison mécanique déverrouillable selon la revendication 10 ou 11, **caractérisé en ce que** l'alésage cylindrique axial interne (20) recevant le piston (21) est aménagé dans la tige (68) de la vis.

13. Dispositif de liaison mécanique déverrouillable selon la revendication 12, **caractérisé en ce que** l'alésage cylindrique axial interne (20) présente un lamage interne (71) constituant une butée axiale pour le piston (21) lorsqu'il occupe sa position de déverrouillage.

14. Dispositif de liaison mécanique déverrouillable selon la revendication 12 ou 13, **caractérisé en ce que** le piston (21) comporte un joint d'étanchéité annulaire (73) coopérant avec une surface cylindrique interne de l'alésage (20).

15. Dispositif de liaison mécanique déverrouillable selon l'une quelconque des revendications 11 à 14, **caractérisé en ce que** la tête (67) de la vis comprend un corps (70) délimitant une chambre interne (74) qui est obturée d'un côté par la tige (68) de la vis et de l'autre par un bouchon (75) qui vient en appui sur un renflement périphérique (78) du composant pyrotechnique (23), une bague entretoise (79) entourant une extrémité du composant pyrotechnique (23) et comportant une première surface de butée (80) coopérant avec le renflement (78) du composant et une deuxième surface de butée (81) pour une extrémité (82) de la tige (68) de la vis de façon à éviter tout contact de cette dernière avec le composant pyrotechnique (23) lors du montage du bouchon (75).

16. Dispositif de liaison mécanique déverrouillable selon l'une quelconque des revendications 1 à 9, **caractérisé en ce que** le premier élément mécanique est solidaire d'une extrémité d'une tige d'un maître cylindre de frein de véhicule et **en ce que** le deuxième élément mécanique est solidaire d'une pédale de freinage.

## Patentansprüche

1. Vorrichtung (5) zur pyrotechnisch entriegelbaren mechanischen Verbindung zwischen zwei mechanischen Elementen, die geeignet sind, Traktions- und/oder Kompressionskräften entlang einer Achse unterliegen zu werden, wobei die Vorrichtung mindestens eine pyrotechnische Komponente (23) und mindestens ein Verriegelungsmittel (15) umfasst, das die Verbindung zwischen den beiden mechanischen Elementen entlang mindestens einer Achse gewährleistet, wobei das Verriegelungsmittel geeignet ist, freigegeben zu werden, sobald die mechanischen Elemente entlang der beschriebenen Achse Traktions- oder Kompressionskräften ausgesetzt werden und in seiner verriegelten Stellung mittels Haltemittel (21) gehalten wird, die vom Druck der von der Auslösung der pyrotechnischen Komponente (23) erzeugten Gase freigegeben werden, wobei die Vorrichtung ***dadurch gekennzeichnet ist, dass*** die Haltemittel einen Kolben (21) umfassen, der in einer axialen zylindrischen Innenbohrung (20) gleiten kann, und zwar unter Einwirkung vom Druck der von der Auslösung der pyrotechnischen Komponente (23) erzeugten Gase, wobei das Verriegelungsmittel (15) über eine externe zylindrische Oberfläche (22) mit dem Kolben (21) oder dessen erster Auflagefläche Kontakt hat, die ihren Verbleib in verriegelter Stellung gewährleistet, wobei das Verriegelungsmittel (15) in Translation mit einem ersten (10, 68) der mechanischen Elemente verbunden ist und mindestens ein Profil (18) umfasst, das gemeinsam mit einem zusätzlichen Profil (19) wirkt, das mit einem zweiten (11, 67) der mechanischen Elementen fest verbunden ist, wobei das Verriegelungsmittel (15) überdies zumindest teilweise die axiale zylindrische Innenbohrung (20) begrenzt, in welcher der Kolben (21) gleiten kann, und das Verriegelungsmittel (15) mindestens zwei verformbare Nasen (15) umfasst, die mit dem ersten (10, 68) der mechanischen Elemente fest verbunden sind, die jeweils mindestens ein externes Profil (18) umfassen, das mit einem zusätzlichen Profil (19) zusammenwirkt, das mit dem zweiten (11, 67) der mechanischen Elementen fest verbunden ist, wobei die Nasen die axiale zylindrische den Kolben (21) aufnehmenden Innenbohrung begrenzen.

2. Vorrichtung zur entriegelbaren mechanischen Verbindung nach Anspruch 1, **dadurch gekennzeichnet, dass** die Nasen (15) ein konisches externes Profil (18) aufweisen.

3. Vorrichtung zur entriegelbaren mechanischen Verbindung nach Anspruch 1 oder 2, **dadurch gekennzeichnet, dass** die pyrotechnische Komponente (23) mit dem Kolben (21) fest verbunden ist.

4. Vorrichtung zur entriegelbaren mechanischen Verbindung nach Anspruch 3, **dadurch gekennzeichnet, dass** die durch die Nasen (15) begrenzten axiale zylindrische Innenbohrung (20) durch eine Kammer (27) verlängert wird, die dazu dient, den Druck der von der Auslösung der pyrotechnischen Komponente (23) erzeugten Gase aufzunehmen.

5. Vorrichtung zur entriegelbaren mechanischen Verbindung nach Anspruch 4, **dadurch gekennzeichnet, dass** der Kolben (21) eine zweite zylindrische Auflagefläche (29) geringeren Durchmessers als den der externe zylindrische Oberfläche (22) oder der erste Auflagefläche, welche die Nasen aufnimmt, umfasst, wobei die zweite Auflagefläche sich entsprechend der durch die Nasen (15) begrenzten axialen zylindrischen Innenbohrung (20) positioniert, sobald der Kolben (21) sich durch die Wirkung vom Druck der Gase verschiebt, was zu einer Biegung der Nasen (15) in Richtung des Kolbens (21) führt, wobei diese Biegung die Freisetzung des externen Profils (18) der Nasen (15) mitsamt dem zusätzlichen Profil (19) bewirkt.

6. Vorrichtung zur entriegelbaren mechanischen Verbindung nach Anspruch 5, **dadurch gekennzeichnet, dass** die zweite zylindrische Auflagefläche (29) auf der einen Seite von einem Flansch (30) begrenzt wird, die für die Führung des Kolbens (21) gegenüber einer internen zylindrischen Oberfläche (28) der Kammer (27) sorgt.

7. Vorrichtung zur entriegelbaren mechanischen Verbindung nach Anspruch 6, **dadurch gekennzeichnet, dass** der Flansch (30) sich nach Verschiebung des Kolbens (21) in einer Vertiefung (31) lagert, die sich an einem Ende der Kammer (27) befindet.

8. Vorrichtung zur entriegelbaren mechanischen Verbindung nach irgendeinem der Ansprüche 1 bis 7, **dadurch gekennzeichnet, dass** die externe zylindrische Oberfläche (22) oder die erste Auflagefläche des Kolbens, die die Nasen aufnimmt, einen Wulst (33) umfasst, der mit einer auf der zylindrischen Oberfläche der axialen zylindrischen Innenbohrung (20) angebrachten kreisförmigen Einkerbung so zusammenwirkt, dass die axiale Positionierung des Kolbens (21) in seiner Halteposition gewährleistet ist.

9. Vorrichtung zur entriegelbaren mechanischen Verbindung nach irgendeinem der Ansprüche 1 bis 8, **dadurch gekennzeichnet, dass** sie mindestens drei verformbare Nasen (15) umfasst, die regelmäßig und winklig verteilt sind.

10. Vorrichtung zur entriegelbaren mechanischen Verbindung nach Anspruch 1 oder 2, **dadurch gekennzeichnet, dass** das erste der die verformbaren Nasen (15) tragenden mechanischen Elemente einen mit Gewinde versehenen Teil (68) umfasst, der einen Schaft der Schraube bildet, wobei das zweite der mechanischen Elementen einen Kopf (67) für besagte Schraube bildet.

11. Vorrichtung zur entriegelbaren mechanischen Verbindung nach Anspruch 10, **dadurch gekennzeichnet, dass** die pyrotechnische Komponente (23) mit dem Kopf (67) der Schraube fest verbunden ist.

12. Vorrichtung zur entriegelbaren mechanischen Verbindung nach Anspruch 10 oder 11, **dadurch gekennzeichnet, dass** die axiale zylindrische Innenbohrung (20), die den Kolben (21) aufnimmt, im Schaft (68) der Schraube angebracht ist.

13. Vorrichtung zur entriegelbaren mechanischen Verbindung nach Anspruch 12, **dadurch gekennzeichnet, dass** die axiale zylindrische Innenbohrung (20) eine Innensenkung (71) aufweist, die für den Kolben (21) ein Axiallager darstellt, wenn er sich in entriegelter Stellung befindet.

14. Vorrichtung zur entriegelbaren mechanischen Verbindung nach Anspruch 12 oder 13, **dadurch gekennzeichnet, dass** der Kolben (21) einen Dichtungsring (73) umfasst, der mit einer internen zylindrischen Oberfläche der Bohrung (20) zusammenwirkt.

15. Vorrichtung zur entriegelbaren mechanischen Verbindung nach irgendeinem der Ansprüche 11 bis 14, **dadurch gekennzeichnet, dass** der Kopf (67) der Schraube einen Körper (70) umfasst, der eine interne Kammer (74) begrenzt, die auf der einen Seite vom Schaft (68) der Schraube und auf der anderen durch einen Deckel (75) verschlossen wird, der auf einem peripheren Wulst (78) der pyrotechnischen Komponente (23) aufliegt, wobei ein Distanzring (79), der ein Ende der pyrotechnischen Komponente (23) einschließt und eine erste Anschlagoberfläche (80) umfasst, mit dem Wulst (78) der Komponente und einer zweiten Anschlagoberfläche (81) an einem Ende (82) des Schafts (68) der Schraube derart zusammenwirkt, dass jedweder Kontakt von letztgenannter mit der pyrotechnischen Komponente (23) bei der Montage des Deckels (75) ausgeschlossen ist.

16. Vorrichtung zur entriegelbaren mechanischen Verbindung nach irgendeinem der Ansprüche 1 bis 9, **dadurch gekennzeichnet, dass** das erste mechanische Element mit einem Ende des Schafts eines Hauptbremszylinders eines Fahrzeugs fest verbunden ist und außerdem dadurch, dass das zweite mechanische Element mit einem Bremspedal fest verbunden ist.

## Claims

1. A pyrotechnically unlockable mechanical linking device (5) between two mechanical elements likely to be subjected to tensile and/or compressive forces along an axis, said device comprising at least one pyrotechnic component (23) and at least one locking means (15) linking the two mechanical elements along at least one axis, said locking means able to be released when the mechanical elements are subjected to tensile and/or compressive forces along said axis and held in the locking position by retention means (21) that are released by the pressure of gases generated by igniting the pyrotechnic component (23), device **characterized in that** the retention means comprise a piston (21) able to slide in an axial cylindrical internal bore (20) under the effect of the gas pressure generated by the pyrotechnic component (23), the locking means (15) being in contact with the piston (21) at its external cylindrical surface (22) or first abutment, which ensures their retention in the locking position, the locking means (15) being linked in translation with a first (10, 68) of the mechanical elements and comprise at least one profile (18) co-operating with a matching profile (19) integral with a second (11, 67) of the mechanical elements, the locking means (15) also delimiting at least partially the axial cylindrical internal bore (20) in which the piston (21) can slide, the locking means comprising at least two deformable tips (15) integral with the first (10, 68) of the mechanical elements and each comprising at least one external profile (18) co-operating with a matching profile (19) integral with the second (11, 67) mechanical element, such tips delimiting the axial internal cylindrical bore receiving the piston (21).

2. An unlockable mechanical linking device according to Claim 1, wherein the tips (15) have conical external profiles (18).

3. An unlockable mechanical linking device according to Claim 3, wherein the pyrotechnic component (23) is integral with the piston (21).

4. An unlockable mechanical linking device according to Claim 3, wherein the axial internal cylindrical bore (20) delimited by the tips (15) is extended by a chamber (27) intended to receive the gas pressure generated by igniting the pyrotechnic component (23).

5. An unlockable mechanical linking device according to Claim 4, wherein the piston (21) incorporates a second cylindrical seat (29) of a diameter less than that of the external cylindrical surface (22) or first seat retaining the tips, said second seat being positioned opposite the cylindrical axial internal bore (20) delimited by the tips (15) when the piston (21) is translated under the action of the gas pressure, thereby allowing the tips (15) to bend in the direction of the piston (21), such bending allowing the external profile (18) of the tips (15) to be disengaged from its matching profile (19).

6. An unlockable mechanical linking device according to Claim 5, wherein the second cylindrical seat (29) is delimited on one side by a collar (30) guiding the piston (21) with respect to an internal cylindrical surface (28) of the chamber (27).

7. An unlockable mechanical linking device according to Claim 6, wherein, after the piston (21) has translated, the collar (30) is housed in a groove (31)arranged at one end of the chamber (27).

8. An unlockable mechanical linking device according to one of Claims 1 to 7, wherein the external cylindrical surface (22), or first piston seat retaining the tips incorporates a rib (33) co-operating with a circular groove arranged on the cylindrical surface of the axial internal bore (20) so as to ensure the axial positioning of the piston (21) in its retention position.

9. An unlockable mechanical linking device according to one of Claims 1 to 8, wherein it incorporates at least three deformable tips (15) evenly spaced angularly.

10. An unlockable mechanical linking device according to Claim 1 or 2, wherein the first of the mechanical elements carrying the deformable tips (15) comprises a threaded part (68) forming the shaft of a screw, the second mechanical element constituting a head (67) for said screw.

11. An unlockable mechanical linking device according to Claim 10, wherein the pyrotechnic component (23) is integral with the screw head (67).

12. An unlockable mechanical linking device according to Claim 10 or 11, wherein the cylindrical axial internal bore (20) receiving the piston (21) is arranged in the screw shaft (68).

13. An unlockable mechanical linking device according to Claim 12, wherein the cylindrical axial internal bore (20) has an internal counter-sink (71) forming an axial abutment for the piston (21) when it is occupying its unlocking position.

14. An unlockable mechanical linking device according to Claim 12 or 13, wherein the piston (21) incorporates a ringshaped sealing ring (73) co-operating with an internal cylindrical surface of the bore (20).

15. An unlockable mechanical linking device according to one of Claims 11 to 14, wherein the screw head (67) comprises a body (70) delimiting an internal chamber (74) that is obturated on one side by the screw shaft (68) and on the other by a plug (75) that presses on a peripheral protuberance (78) of the pyrotechnic component (23), a spacer ring (79) surrounding an end of the pyrotechnic component (23) and incorporating a first abutment surface (80) co-operating with the protuberance (78) on the component and a second abutment surface (81) for an end (82) of the screw shaft (68) so as to avoid any contact between it and the pyrotechnic component (23) when the plug (75) is mounted.

16. An unlockable mechanical linking device according to one of Claims 1 to 9, wherein the first mechanical element is integral with one end of a rod of a master brake cylinder for a vehicle and the second mechanical element is integral with a brake pedal.
